# FASCICULE DE BREVET EUROPEEN

(11) **EP 3 093 528 B1**
(45) Date de publication et mention de la délivrance du brevet: **26.01.2022**
(21) Numéro de dépôt: 16169219.9
(22) Date de dépôt: 11.05.2016
(51) Int. Cl.: F16H 13/02, F16H 55/32, B64C 25/40

(54) **GALET D'ENTRAINEMENT**
ANTRIEBSROLLE
A DRIVE ROLLER

(30) Priorité: 12.05.2015 FR 1554274
(43) Date de publication de la demande: 16.11.2016
(73) Titulaire: Safran Landing Systems, 78140 Vélizy-Villacoublay (FR)
(72) Inventeur: LARTIGUE, Norbert, 92350 LE PLESSIS ROBINSON (FR)
(74) Mandataire: Lavaud, Thomas

(56) Documents cités:
- EP-A1- 0 452 272
- FR-A- 980 305
- US-A- 2 622 419
- US-A1- 2010 147 995

## Description

destiné à entraîner en rotation une roue d'un véhicule tel qu'un aéronef.

### ARRIERE PLAN DE L'INVENTION

Un certain nombre de raisons poussent les constructeurs d'aéronefs à tenter de motoriser les roues des aéronefs, en utilisant notamment des actionneurs d'entraînement équipés de moteurs électriques. Une telle motorisation présente en effet des avantages environnementaux et économiques importants (réduction de la consommation de carburant, réduction du bruit pendant les phases de roulage, etc.), et permet de réaliser des fonctions nouvelles : ma-nœuvre de l'aéronef lorsque les moteurs de propulsions sont éteints, roulage en marche arrière, pilotage de l'aéronef au sol à distance, etc.

De nombreuses architectures ont été étudiées par les concepteurs et intégrateurs des actionneurs d'entraînement des roues d'atterrisseurs d'aéronef.

Dans un premier type d'architecture, un actionneur d'entraînement en rotation d'une roue comporte un moteur électrique sans balais, un boîtier de réduction comprenant deux étages de réduction, un dispositif d'embrayage, et un troisième étage de réduction entraînant tangentiellement en rotation la roue via des bielles. Dans ce type d'architecture, un nombre relativement important de pièces sont liées de façon permanente à la roue et subissent les mêmes contraintes mécaniques que celle-ci (accélérations, vibrations, chocs, etc.), ce qui pose un problème de sûreté de fonctionnement pour l'actionneur d'entraînement et, plus généralement, pour la fonction d'entraînement de la roue réalisée par l'actionneur.

Dans un deuxième type d'architecture, le dispositif d'embrayage est remplacé par l'action des bielles qui accouplent et désaccouplent le boîtier de réduction à la roue. Ce type d'architecture est complexe et peu robuste mécaniquement. De plus, l'imprécision de position des bielles, notamment lors de l'accouplement en vitesse et sous déformation de l'atterrisseur et de la roue, oblige à utiliser des bielles volumineuses et donc difficiles à intégrer entre la roue et la jambe de l'atterrisseur.

Dans un troisième type d'architecture, l'actionneur comporte un moteur électrique sans balais, un bloc réducteur comprenant un boîtier de réduction et un pignon relié à la sortie du boîtier de réduction, le pignon engrenant une couronne dentée fixée sur une jante de la roue. L'engagement et le désengagement de l'actionneur sur la roue sont réalisés par rapprochement et éloignement radial du bloc réducteur permettant d'engrener et de désengrener le pignon sur la couronne dentée. Cette architecture présente des oscillations dans la transmission de couple qui réduisent la durée de vie de la chaîne de transmission.

Pour remédier aux inconvénients décrits plus tôt, il a été envisagé d'utiliser une architecture d'actionneur d'entraînement utilisant un ou plusieurs rouleaux de friction (ou galets d'entraînement par friction) associés à des moyens pour appliquer les rouleaux de friction contre la roue ou contre une piste de glissement (ou couronne) montée sur une jante de la roue pour faire tourner la roue. La conception de l'actionneur d'entraînement et du galet d'entraînement lui-même doivent être conformes aux exigences particulièrement contraignantes applicables aux équipements montés au bas d'un atterrisseur, dont l'intégration doit être robuste aux déformations relativement importantes subies notamment par les jantes des roues, et qui doivent résister aux chocs et aux vibrations particulièrement élevés lors des atterrissages et des freinages suivant les atterrissages.

Le document FR 980 305 A divulgue un galet d'entraînement comportant une armature rigide définissant un moyeu pour la rotation du galet autour d'un axe de rotation.

### OBJET DE L'INVENTION

L'invention a pour objet un galet d'entraînement qui soit adapté à entraîner en rotation une roue d'aéronef malgré les déplacements relatifs subis par le galet et la jante de la roue, et qui soit robuste mécaniquement pour présenter une durée de vie suffisante.

### RESUME DE L'INVENTION

En vue de la réalisation de ce but, on propose un galet d'entraînement tel que décrit dans la revendication 1.

Le galet d'entraînement est avantageusement destiné à coopérer avec une piste de roulement rigide présentant des ondulations et montée sur une jante d'une roue d'un atterrisseur d'un aéronef.

Les corps de coussinet en matériau déformable permettent de compenser les déplacements et les désalignements relatifs entre le galet d'entraînement et la piste de roulement.

La combinaison des barreaux fixes de l'armature rigide, des anneaux rigides externes et des corps de coussinet déformables permet de transmettre une partie du couple par coopération avec les ondulations de la piste de roulement, l'autre partie du couple étant transmise par friction. On réduit ainsi l'effort radial à développer sur le galet d'entraînement pour un couple à transmettre. La compression des corps de coussinet déformables permet aussi d'augmenter la surface de contact entre le galet d'entraînement et la piste de roulement tout en homogénéisant les contraintes sur cette surface, et de diminuer encore les contraintes locales à l'intérieur du galet d'entraînement. La diminution et l'homogénéisation de ces contraintes rend le galet d'entraînement plus robuste et lui confère une durée de vie plus importante, le matériau travaillant localement moins sévèrement.

On propose aussi un système d'entraînement en rotation d'une roue, le système d'entraînement comprenant un ou plusieurs galet (s) d'entraînement tel(s) que décrit(s) plus tôt et une piste de roulement montée sur la roue, la piste de roulement présentant des obstacles en forme d'ondulations.

### BREVE DESCRIPTION DES DESSINS

L'invention sera mieux comprise à la lumière de la description qui suit en référence aux figures des dessins annexés parmi lesquelles :
- la figure 1 est une vue en perspective du galet d'entraînement de l'invention représenté dans une position d'engagement avec une piste de roulement montée sur une jante d'une roue ;
- la figure 2 est une vue en perspective du galet d'entraînement de l'invention, dans lequel une bande de roulement, des coussinets, un flanc latéral et un corps de galet ont été retirés pour rendre apparente l'armature rigide du galet ;
- la figure 3 est une vue de face du galet de la figure 1, dans lequel un flanc latéral du galet a été retiré pour rendre apparent l'intérieur du galet d'entraînement ;
- la figure 4 est une vue de face partielle de l'intérieur du galet en position d'engagement lorsqu'un effort radial est appliqué sur le galet.

### DESCRIPTION DETAILLEE DE L'INVENTION

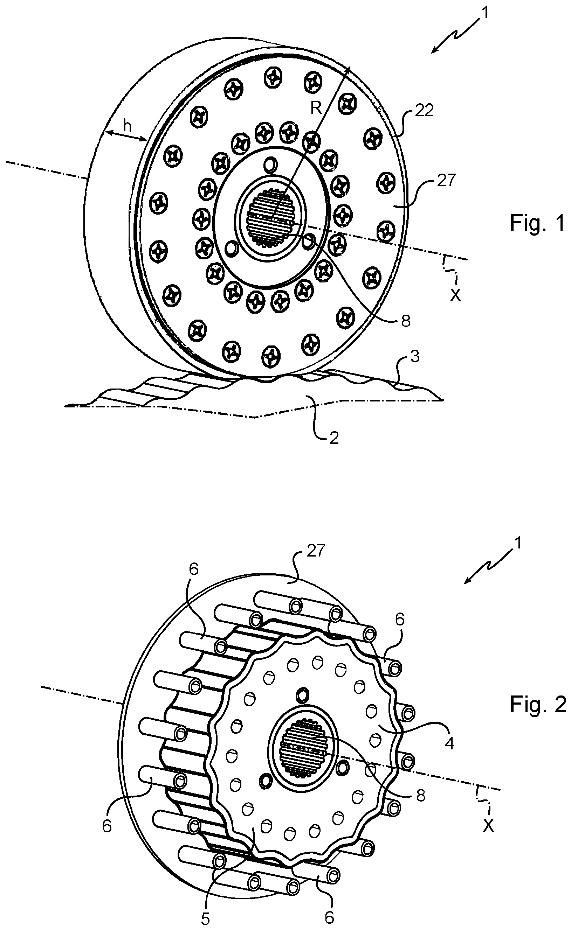

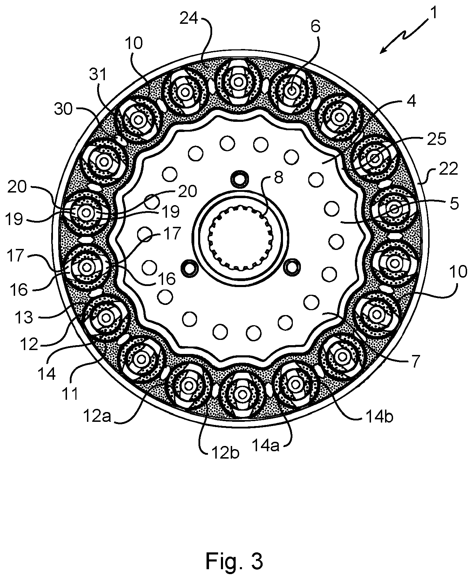

En référence aux figures 1 à 4, le galet d'entraînement de l'invention 1 forme ici avec une piste de roulement rigide 2 un système d'entraînement en rotation d'une roue d'un atterrisseur d'un aéronef.

La piste de roulement rigide 2 constitue une couronne montée sur une face interne d'une jante de la roue coaxialement à la roue, ladite face interne de la jante s'étendant en regard d'une jambe de l'atterrisseur de l'aéronef lorsque la roue est montée au bas de l'atterrisseur.

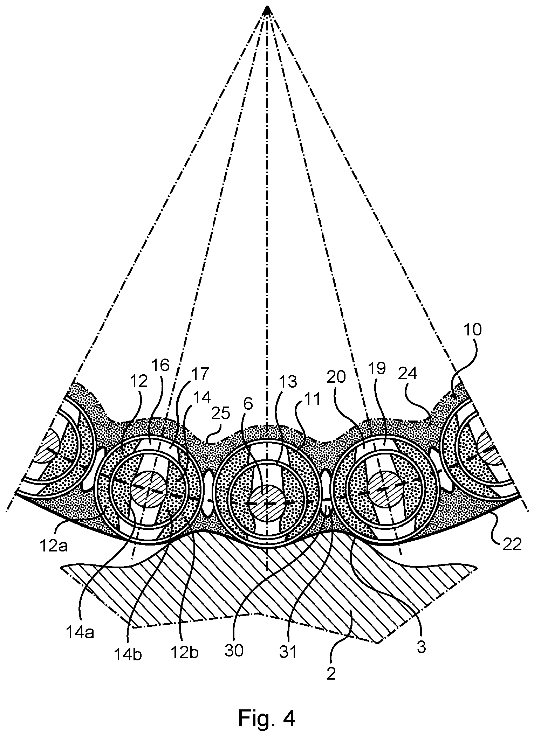

Le galet d'entraînement 1, lorsqu'il est positionné dans une position d'engagement représentée sur les figures 1 et 4, coopère avec des obstacles formés sur la piste de roulement 2, les obstacles étant ici constitués d'ondulations 3 s'étendant sur une circonférence de la piste de roulement 2.

Au repos, le galet d'entraînement 1 présente une forme générale extérieure cylindrique fermée d'axe X, de hauteur h et de rayon externe R. La hauteur h est de préférence inférieure au rayon externe R ce qui confère au galet d'entraînement 1 une forme aplatie.

Le galet d'entraînement 1 comporte tout d'abord une armature rigide 4 qui définit un moyeu central 5 pour la rotation du galet d'entraînement 1 autour de l'axe de rotation X et une pluralité de barreaux 6 régulièrement disposés autour du moyeu central 5 en s'étendant selon la direction de l'axe X. L'armature rigide 4 est ici une pièce métallique.

Le moyeu central 5 comporte une partie courante 7. La partie courante 7 possède une forme générale tubulaire, d'axe X et de hauteur h, qui présente toutefois des ondulations longitudinales sur sa périphérie. A l'intérieur de la partie courante 7 du moyeu central 5 est intégré un manchon femelle cannelé 8. Ce manchon femelle cannelé 8 est destiné à accueillir un arbre d'entraînement lui-même relié à un dispositif de réduction pour entraîner en rotation le galet d'entraînement 1, transmettre un couple d'entraînement à la roue et entrainer la roue en rotation.

Le galet d'entraînement 1 comporte de plus des coussinets 10 qui sont enfilés chacun sur l'un des barreaux 6 de l'armature rigide 4.

Chaque coussinet 10 comprend un anneau rigide externe 11, ici fabriqué en métal. Chaque anneau rigide externe 11 entoure un corps de coussinet déformable 12 en matériau déformable. Le matériau déformable des corps de coussinets 12 est adapté à subir des niveaux de compression importants. Le matériau déformable des corps de coussinets 10 est ici un matériau élastomère.

Chaque coussinet 10 comprend de plus un insert cylindrique rigide 13, ici fabriqué en métal, enfilé sur le barreau 6 associé au coussinet 10. Chaque insert cylindrique rigide 13 est relié au barreau 12 associé par un corps d'insert 14 déformable en matériau déformable. Le matériau déformable des corps d'insert 14 est ici identique à celui des corps de coussinets 13.

Chaque corps de coussinet 12 est subdivisé en deux demi-corps 12a, 12b disposés orthoradialement de part et d'autre de l'insert cylindrique rigide 13 associé (et donc du barreau associé 6) en définissant deux premières cavités 16 de part et d'autre du barreau 6 associé.

Un corps de première cavité déformable 17 en matériau déformable s'étend dans chaque première cavité 16. Le matériau déformable du corps de première cavité 17 est moins rigide que celui du corps de coussinet 12.

De même, chaque corps d'insert 14 est subdivisé en deux demi-corps disposés 14a, 14b orthoradialement de part et d'autre du barreau 6 associé en définissant deux deuxièmes cavités 19 de part et d'autre du barreau 6 associé.

Un corps de deuxième cavité déformable 20 en matériau déformable peu rigide s'étend dans chaque deuxième cavité 19. Le matériau déformable du corps de deuxième cavité 20 est ici le même que celui du corps de première cavité 17.

Une bande déformable 22 s'étend autour des coussinets 10 sur une circonférence du galet d'entraînement 1 pour définir une bande de roulement du galet d'entraînement 1.

La bande déformable 22 est constituée par une fine couche de matériau polymère renforcée par une toile d'un tissu de fils métalliques noyée dans le matériau polymère. La fine couche de matériau polymère permet de rattraper d'éventuels défauts de position de la piste de roulement 2, et de chasser des polluants ou des éléments liquides quelconques qui se trouveraient sur la piste de roulement 2 après avoir été plaqués sur la piste de roulement 2 par la charge radiale appliquée sur la piste de roulement 2 par le galet d'entraînement 1. Le renforcement par la toile du tissu de fils métalliques permet de renforcer la raideur circonférentielle du galet d'entraînement. On permet ainsi au galet d'entraînement 1 d'accepter des contraintes radiales et tangentielles plus importantes.

Un corps de galet déformable 24 en matériau déformable s'étend dans l'espace entre le moyeu central 5 et la bande déformable 22 en englobant les coussinets 10. Le matériau déformable du corps de galet 24 est ici le même que celui du corps de coussinet 12 mais pourrait être de caractéristiques (dont sa raideur) différentes.

Le corps de galet 24 et le moyeu central 5 sont séparés par une membrane 25 constituée par une fine couche en matériau polymère renforcée par une toile d'un tissu de fils métalliques noyée dans le matériau polymère. Le matériau polymère est le même que celui utilisé pour la bande déformable 22. La forme de la membrane 25 présente des ondulations en regard des ondulations de la partie courante 7 du moyeu central 5.

L'armature rigide 4 du galet d'entraînement 1 comporte de plus des flancs latéraux 27, ici des flancs métalliques. Les flancs latéraux 27 sont fixés au moyeu central 5. Chaque barreau 6 comporte une première extrémité fixée à l'un des flancs latéraux 27 et une deuxième extrémité fixée à l'autre des flancs latéraux 27. Les flancs latéraux 27 sont destinés à empêcher une expansion axiale selon l'axe X du matériau déformable formant le corps de galet 24 et à augmenter la raideur du galet d'entraînement 1 en compression. Les flancs latéraux 27 transmettent le couple aux barreaux 6 et au moyeu central 5. Les anneaux rigides externes 11 des coussinets 10 sont mobiles radialement par rapport aux barreaux 6 de l'armature rigide 4, permettant ainsi un déplacement du matériau déformable du corps de galet 24 à proximité des coussinets 10, ce qui permet à la périphérie du galet d'entraînement 1 de s'adapter aux formes et aux déplacements de la piste de roulement 2. On note que le déplacement des coussinets 10 est contenu par la bande déformable 22 ce qui évite un échauffement et un vieillissement prématuré du matériau déformable du corps de galet 24 se situant dans les zones à proximité des coussinets 10.

La combinaison des anneaux rigides externes 11, des inserts cylindriques rigides 13 et des corps de coussinet 12 permet de transmettre une partie du couple par friction mais aussi par engrènement, par une conversion de l'effort radial en effort tangentiel qui résulte de l'interférence obtenue entre les ondulations 3 de la piste de roulement 2 et le matériau déformable du corps de galet 24 comprimé entre ces ondulations 3. La compression du matériau déformable du corps de galet 24 permet aussi d'augmenter la surface de contact entre le galet d'entraînement 1 et la piste de roulement 2.

La structure du galet d'entraînement 1 permet en outre de créer une raideur anisotrope du galet d'entraînement 1 entre les directions radiale et tangentielle.

Les corps de coussinet 12 et les corps d'insert 14 sont formés par des couches de matériau déformable relativement fines. Ces couches relativement fines acceptent de fortes contraintes internes tangentielles du fait de leur confinement dans un volume restreint et donc de la raideur tangentielle importante des matériaux déformables. La transmission du couple et de l'effort tangentiel est ainsi améliorée à l'intérieur du galet d'entraînement 1.

Au contraire, le matériau déformable peu rigide remplissant les premières cavités 16 et les deuxièmes cavités 19 autorise un déplacement radial relativement important des anneaux rigides externes 11 et des inserts cylindriques rigides 13 sous l'effet d'un effort radial appliqué sur le galet d'entraînement 1, du fait de la faible raideur du galet d'entraînement 1 dans cette direction radiale. Sous l'effet d'un effort radial, les anneaux rigides externes 11 et les inserts cylindriques rigides 13 remontent vers le moyeu central 5 ce qui génère une interface plane avec la piste de roulement 2 au niveau du contact entre le galet d'entraînement 1 et la piste de roulement 2.

Ainsi, lorsque le coussinet 10 en position radiale de la piste 2 est comprimé sous l'effet de l'effort radial, celui-ci se dérobe vers le centre du galet d'entraînement 1. De ce fait les coussinets adjacents, de par la déformation/compression du matériau déformable incompressible aux abords du moyeu central 5, sont eux repoussés (en partie) radialement vers l'extérieur du galet d'entraînement 1 et viennent saillir. Ce phénomène vient alors augmenter la surface de contact galet/piste en étalant le galet sur la piste.

La surface de contact entre le galet d'entraînement 1 et la piste de roulement 2 est ainsi augmentée, tout comme le nombre d'anneaux rigides externes 11 de coussinets 10 en contact avec la piste de roulement 2 via la bande déformable 22. La transmission de couple par engrènement est ainsi optimisée. Une souplesse radiale est de plus apportée à la structure du galet d'entraînement 1, ladite souplesse radiale étant propice à l'adaptation du galet d'entraînement 1 aux déformées de la piste de roulement 2.

Des troisièmes cavités 30 sont en outre formées dans le corps de galet 24 entre chaque coussinet 10. Un corps de troisième cavité déformable 31 en matériau déformable peu rigide s'étend dans chaque troisième cavité 30. Le matériau déformable peu rigide des corps de troisième cavité 30 est ici le même que celui du corps de première cavité 17. Les troisièmes cavités permettent aux anneaux rigides externes 11 des coussinets 10 de se déplacer radialement sans altérer le matériau déformable du corps de galet déformable 24. On évite ainsi la formation d'une fine couche de matériau déformable du corps de galet déformable 24 soumise à d'importantes contraintes en cisaillement qui seraient nocives pour le matériau déformable du corps de galet déformable 24. Les anneaux rigides externes 11 des coussinets 10, relativement proches, peuvent ainsi venir en contact les uns avec les autres tout en préservant la raideur importante nécessaire pour transmettre l'effort tangentiel produit par le couple dans limiter leurs déplacements radiaux.

Avantageusement, le pas angulaire entre les coussinets 10 correspond au pas des ondulations 3 de la piste de roulement 2.

Avantageusement, le nombre d'ondulations de la piste de roulement 2 en contact avec le galet d'entraînement 1 est au moins égal à deux pour assurer une bonne transmission du couple. Plus il y a d'ondulations en contact sous le galet d'entraînement 1, plus la partie de couple transmise par engrènement est importante (pour un couple donné), et donc plus la transmission de couple est efficace.

On note que la structure du galet d'entraînement de l'invention permet, en cas de défaillance de l'un des coussinets 10, de remplacer ce coussinet 10 individuellement sans qu'il soit nécessaire de remplacer le galet dans son intégralité.

L'invention n'est pas limitée au mode de réalisation particulier qui vient d'être décrit, mais, bien au contraire, couvre toute variante entrant dans le cadre de l'invention tel que défini par les revendications.

Bien que l'on ait indiqué que la bande déformable est ici formée d'une fine couche de polymère renforcée par une toile d'un tissu de fils métalliques noyée dans matériau élastomère, cette bande déformable peut être fabriquée avec tout type de matériau déformable, et notamment, entièrement ou partiellement, avec tout type de tissu comprenant ou non des fils non métalliques.

Bien que l'on ait indiqué que les flancs sont des flancs métalliques, ceux-ci peuvent parfaitement être fabriqués avec un ou des matériaux différents : matériau composite, etc.

Bien que l'on ait indiqué que les matériaux déformables du corps de galet, des corps de coussinet et des corps d'insert sont identiques, il est parfaitement possible d'utiliser des matériaux déformables différents. Ceci vaut aussi pour les matériaux déformables des corps de première cavité, de deuxième cavité et de troisième cavité.

De plus, bien que l'on ait décrit que les premières, deuxièmes et troisièmes cavités sont chacune remplies par un matériau déformable peu rigide, celles-ci peuvent aussi être vides de matière, remplies d'air, etc.

Les matériaux déformables évoqués ne sont pas nécessairement des élastomères.

Bien que l'on ait indiqué que la partie courante 7 présente des ondulations longitudinales sur sa périphérie, il est parfaitement possible de prévoir une partie courante de forme différente, notamment cylindrique sans ondulation.

Bien que l'on ait indiqué que la piste de roulement comporte des ondulations, celle-ci peut parfaitement être lisse ou bien rugueuse sans ondulation.

Bien que l'on ait décrit un système comprenant un galet et une piste, l'invention peut bien sûr être mise en œuvre en associant une pluralité de galets et une piste.

## Revendications

1. Galet d'entraînement (1), destiné à entraîner en rotation une roue de véhicule, comportant :
- une armature rigide (4) définissant un moyeu (5) pour la rotation du galet autour d'un axe de rotation X, **caractérisé en ce que** le galet d'entraînement comporte en outre une pluralité de barreaux (6) régulièrement disposés autour du moyeu (5) en s'étendant selon la direction de l'axe X, et
- des coussinets (10) enfilés chacun sur l'un des barreaux (6) et comprenant chacun un anneau rigide externe(11) entourant un corps de coussinet (12) en matériau déformable,
le galet d'entraînement comprenant en outre une bande déformable (22) qui s'étend autour des coussinets pour définir une bande de roulement du galet.

2. Galet selon la revendication 1 comprenant un corps de galet (24) en matériau déformable s'étendant dans l'espace entre le moyeu et la bande déformable en englobant les coussinets.

3. Galet selon l'une des revendications précédentes, dans lequel le corps de coussinet (12) est subdivisé en deux demi-corps (12a, 12b) disposés orthoradialement de part et d'autre du barreau (6) associé et définissant deux premières cavités (16) de part et d'autre du barreau associé (6).

4. Galet selon la revendication 3, dans lequel un corps de première cavité (17) en matériau déformable s'étend dans chaque première cavité (16), le matériau déformable du corps de première cavité étant moins rigide que celui du corps de coussinet (12).

5. Galet selon l'une des revendications précédentes, dans lequel chaque coussinet comprend en outre un insert cylindrique rigides (13), les inserts cylindriques rigides étant reliés au barreau par un corps d'insert (14) en matériau déformable.

6. Galet selon la revendication 5, dans lequel chaque corps d'insert est subdivisé en deux demi-corps (14a, 14b) disposées orthoradialement de part et d'autre du barreau (6) associé et définissant deux deuxièmes cavités (19) de part et d'autre du barreau associé.

7. Galet selon la revendication 6, dans lequel un corps de deuxième cavité (20) en matériau déformable s'étend dans chaque deuxième cavité, le matériau déformable du corps de deuxième cavité étant moins rigide que celui du corps de coussinet.

8. Galet selon l'une des revendications 5 à 7, dans lequel des troisièmes cavités (30) sont formées entre chaque coussinet.

9. Galet selon la revendication 8, dans lequel un corps de troisième cavité (31) en matériau déformable s'étendant dans chaque troisième cavité, le matériau déformable du corps de troisième cavité étant moins rigide que celui du corps de coussinet.

10. Galet selon la revendication 8, dans lequel les troisièmes cavités (30) sont vides.

11. Galet selon l'une des revendications précédentes, dans lequel l'armature rigide (4) comporte en outre deux flancs latéraux (27) fixés au moyeu (5), chaque extrémité de chaque barreau (6) étant fixée à l'un des flancs latéraux.

12. Système d'entraînement en rotation d'une roue, le système d'entraînement comprenant au moins un galet d'entraînement (1) selon l'une des revendications précédentes et une piste de roulement (2) montée sur la roue, la piste de roulement présentant des obstacles en forme d'ondulations (3).

13. Système d'entraînement selon la revendication 12, dans lequel le pas entre les coussinets correspond au pas des ondulations.

## Patentansprüche

1. Antriebsrolle (1), die dazu bestimmt ist, ein Fahrzeugrad in Drehung anzutreiben, umfassend:
- eine starre Verstärkung (4), die eine Nabe (5) zur Drehung der Rolle um eine Drehachse X definiert, **dadurch gekennzeichnet, dass** die Antriebsrolle ferner eine Vielzahl von Stäben (6) umfasst, die regelmäßig um die Nabe (5) herum angeordnet sind und sich dabei in Richtung der Achse X erstrecken, und
- Lagerbuchsen (10), die jeweils auf einen der Stäbe (6) aufgezogen sind und jeweils einen äußeren starren Ring (11) umfassen, der einen Lagerbuchsenkörper (12) aus verformbarem Material umgibt,
wobei die Antriebsrolle ferner ein verformbares Band (22) umfasst, das sich um die Lagerbuchsen herum erstreckt, um eine Lauffläche für die Rolle zu definieren.

2. Rolle nach Anspruch 1, umfassend einen Rollenkörper (24) aus verformbarem Material, der sich in dem Raum zwischen der Nabe und dem verformbaren Band erstreckt und dabei die Lagerbuchsen umschließt.

3. Rolle nach einem der vorhergehenden Ansprüche, bei der der Lagerbuchsenkörper (12) in zwei Halbkörper (12a, 12b) unterteilt ist, die orthoradial zu beiden Seiten des dazugehörigen Stabes (6) angeordnet sind und zwei erste Hohlräume (16) zu beiden Seiten des dazugehörigen Stabes (6) bilden.

4. Rolle nach Anspruch 3, bei der sich ein erster Hohlraumkörper (17) aus verformbarem Material in jedem ersten Hohlraum (16) erstreckt, wobei das verformbare Material des ersten Hohlraumkörpers weniger starr als das des Lagerbuchsenkörpers (12) ist.

5. Rolle nach einem der vorhergehenden Ansprüche, bei der jede Lagerbuchse ferner einen starren zylindrischen Einsatz (13) umfasst, wobei die starren zylindrischen Einsätze mit dem Stab über einen Einsatzkörper (14) aus verformbarem Material verbunden sind.

6. Rolle nach Anspruch 5, bei der jeder Einsatzkörper in zwei Halbkörper (14a, 14b) unterteilt ist, die orthoradial zu beiden Seiten des dazugehörigen Stabes (6) angeordnet sind und zwei zweite Hohlräume (19) zu beiden Seiten des dazugehörigen Stabes definieren.

7. Rolle nach Anspruch 6, bei der sich ein zweiter Hohlraumkörper (20) aus verformbarem Material in jedem zweiten Hohlraum erstreckt, wobei das verformbare Material des zweiten Hohlraumkörpers weniger starr als das des Lagerbuchsenkörpers ist.

8. Rolle nach einem der Ansprüche 5 bis 7, bei der die dritten Hohlräume (30) zwischen jeder Lagerbuchse ausgebildet sind.

9. Rolle nach Anspruch 8, bei der sich ein dritter Hohlraumkörper (31) aus verformbarem Material in jedem dritten Hohlraum erstreckt, wobei das verformbare Material des dritten Hohlraumkörpers weniger starr als das des Lagerbuchsenkörpers ist.

10. Rolle nach Anspruch 8, bei der die dritten Hohlräume (30) leer sind.

11. Rolle nach einem der vorhergehenden Ansprüche, bei der die starre Verstärkung (4) ferner zwei seitliche Flanken (27) umfasst, die an der Nabe (5) befestigt sind, wobei jedes Endes jedes Stabes (6) an einer der seitlichen Flanken befestigt ist.

12. System zum Drehantrieb eines Rades, wobei das Antriebssystem mindestens eine Antriebsrolle (1) nach einem der vorhergehenden Ansprüche und eine an dem Rad montierte Rollbahn (2) umfasst, wobei die Rollbahn (2) Hindernisse in Form von Wellen (3) aufweist.

13. Antriebssystem nach Anspruch 12, bei dem die Teilung zwischen den Lagerbuchsen der Teilung der Wellen entspricht.

## Claims

1. A drive roller (1), for driving a wheel of a vehicle in rotation, comprising:
• rigid reinforcement (4) defining a hub (5) for rotation of the roller about an axis of rotation X, **characterized in that** the drive roller also comprises a plurality of bars (6) regularly arranged around the hub (5) and extending parallel to the axis X; and
• bushings (10), each engaged on a respective one of the bars (6) and each comprising an outer rigid ring (11) surrounding a bushing body (12) made of deformable material,
the drive roller also comprising a deformable band (22) extending around the bushings in order to define a tread for the roller.

2. A roller according to claim 1, including a roller body (24) made of deformable material extending in the space between the hub and the deformable band and encompassing the bushings.

3. A roller according to any preceding claim, wherein the bushing body (12) is subdivided into two half-bodies (12a, 12b) arranged circumferentially on either side of the associated bar (6) and defining two first cavities (16) radially on either side of the associated bar (6).

4. A roller according to claim 3, wherein a first cavity body (17) of deformable material extends in each first cavity (16), the deformable material of the first cavity body being less rigid than the material of the bushing body (12).

5. A roller according to any preceding claim, wherein each bushing further includes a rigid cylindrical insert (13), each rigid cylindrical insert being connected to the associated bar by an insert body (14) of deformable material.

6. A roller according to claim 5, wherein each insert body is subdivided into two half-bodies (14a, 14b) arranged circumferentially on either side of the associated bar (6) and defining two second cavities (19) radially on either side of the associated bar.

7. A roller according to claim 6, wherein a second cavity body (20) of deformable material extends in each second cavity, the deformable material of the second cavity body being less rigid than the material of the bushing body.

8. A roller according to any one of claims 5 to 7, wherein third cavities (30) are formed between adjacent bushings.

9. A roller according to claim 8, wherein a third cavity body (31) of deformable material extends in each third cavity, the deformable material of the third cavity bodies being less rigid than the material of the bushing bodies.

10. A roller according to claim 8, wherein the third cavities (30) are empty.

11. A roller according to any preceding claim, wherein the rigid reinforcement (4) further includes two lateral flanks (27) fastened to the hub (5), each end of each bar (6) being fastened to one of the lateral flanks.

12. A drive system for driving a wheel in rotation, the drive system comprising at least one drive roller (1) according to any preceding claim and a running track (2) mounted on the wheel, the running track presenting obstacles in the form of undulations (3).

13. A drive system according to claim 12, wherein the pitch of the bushings corresponds to the pitch of the undulations.
